# EUROPEAN PATENT SPECIFICATION

(11) **EP 3 152 251 B1**
(45) Date of publication and mention of the grant of the patent: **02.05.2018**
(21) Application number: 15747858.7
(22) Date of filing: 04.06.2015
(51) Int. Cl.: C08J 3/24, C08J 5/04, C08J 5/24

(54) **PROCESS FOR MAKING CURABLE, MULTI-LAYER FIBER-REINFORCED PREPREG**
VERFAHREN ZUR HERSTELLUNG EINES HÄRTBAREN MEHRSCHICHTIGEN FASERVERSTÄRKTEN PREPREGS
PROCÉDÉ DE FABRICATION DE PRÉ-IMPRÉGNÉ RENFORCÉ PAR DES FIBRES, MULTICOUCHE, DURCISSABLE

(30) Priority: 09.06.2014 US 201462009379 P
(43) Date of publication of application: 12.04.2017
(73) Proprietor: Dow Global Technologies LLC, Midland, MI 48674 (US)
(72) Inventor: TUDOR, Jay M., Midland, MI 48667 (US); BANK, David H., Midland, MI 48667 (US); MAYER, Robert, Pleasanton, CA 94566 (US)
(74) Representative: Beck Greener
(86) International application number: PCT/US2015/034133
(87) International publication number: WO 2015/191354

(56) References cited:
- EP-A1- 1 457 515
- WO-A1-2005/033393
- US-A1- 2011 064 908

## Description

The present invention relates to methods for making a fiber-reinforced prepreg.

Fiber reinforced composites are widely used to make a large array of products. The composites include reinforcing fibers that provide mechanical strength and stiffness, and a polymeric phase that binds the fibers together and holds them in the desired configuration.

The composites are often produced from a fiber-reinforced molding material, which is often referred to as a "prepreg". Various types of prepregs are produced.

One way to classify these is by the form in which the fibers are provided. In some cases, the fibers are provided in the form of a non-woven mat of short fibers. An advantage of this type is that the physical properties of the final product tend to be highly isotropic, that is, very nearly the same in all directions. However, short fibers do not reinforce as efficiently as longer fibers do. Therefore, woven mats are commonly used when higher strength is needed, despite the significant added expense of the weaving process. These woven mats tend to give rise to anisotropic properties in the molded product, with greater strength and lower elongation being seen in the warp and weft directions of the woven fibers, and lower strength and higher elongation being seen in other directions. In each of these types, the fibers bend at points where they pass over or under other fibers. The bends represent weak points where the fibers can buckle under compression. Another problem is that the woven fabric leaves an undesired pattern on the surface of the finished part, which is often visible even when the part is painted.

A way to reduce bend formation and to avoid the visible pattern is to stack layers of aligned long fibers and then impregnate the stack. In this method, a first layer of aligned fibers is formed, and then one or more subsequent layers of aligned fibers are sequentially placed on top of the first layer. Each successive layer is aligned at an angle to the immediately preceding layer. After the layers are stacked, they are sewn together to hold the fibers. By varying the number of layers and the directions of the fibers in each layer, the properties of the molded composite can be made to vary from high isotropic to highly anisotropic. This versatility and the ability to obtain precise alignment of the reinforcing fibers are significant advantages of this approach. The use of long fibers, which extend across the entire length or width of the material, permits much higher strengths to be attained compared to the case when non-woven short fiber mats are used. Furthermore, the fibers bend only slightly if at all at points of intersection with other fibers, which eliminates a source of potential weakness.

A problem with the last-mentioned approach is that it is difficult to completely and uniformly impregnate the fiber stack, especially as the number of fiber layers and, correspondingly, the areal weight (weight per unit of major surface area) increases. The extent of impregnation can be expressed in terms of "percent infusion", which compares the amount of resin infused into the fiber layers with the amount of resin that would be infused if the entire volume between the fibers were completely filled with resin. Complete (*i.e.,* 100%) infusion is seldom attained, and as the number of fiber layers increases, the % infusion tends to deviate more and more from complete infusion. For example, 75% infusion of resin is readily attainable at a fiber areal weight of 225 g/m²; however, when the areal weight is increased to 400 to 600 g/m², it becomes difficult to obtain even 60% infusion. At an areal weight of 900 g/m², resin infusion may drop to 40 to 45%. Incomplete infusion results in "dry" fibers that are not coated or are poorly coated with resin. When the prepreg is molded, the resulting composite has voids or weak areas where the fibers are inadequately bonded. These defects reduce the mechanical strength and stiffness of the part. The infusion problem can be ameliorated somewhat by using a low viscosity resin, but in that case the resin flows too much during the subsequent molding step, forming regions rich in fibers and other regions that are rich in resin. Another problem is that the method is not well adapted to producing highly specialized prepregs optimized for specific applications. The process typically can orient the layers only at common angles such as ±45, ±60 or 90 degrees, whereas for specific parts other angles will produce optimum performance. A third problem is that expensive and complex equipment is needed to arrange the fibers in the correct orientations and hold them in place until the stitching step is completed. Yet another problem is that the stitching can restrict the extent to which the prepreg can be shaped during the molding process.

One way of addressing the infusion problem is to individually infuse each layer of unidirectional fiber, and then form the impregnated monolayers into a stack. US 2011/0064908 describes making a multi-layer prepreg in such a manner. US 2011/0064908 does not describe how the layers of the stack are held together; presumably this is due to the normal tackiness of the resin composition. Because the resin is tacky, it is necessary to apply release layers to the exposed major surfaces, so the stack will not stick to itself or other materials during transportation, handling and storage. The tacky resin also renders the stack unsuitable for automated handing, as the resin will stick to handling equipment.

GB 2,450,196 also describes partially infusing unidirectional fibers with a thermosetting resin and then stacking them to form a thicker assembly. In GB 2,450,196, the individual plies do not adhere to each other, nor are they otherwise joined, prior to the molding step. The individual plies are not perfectly flat, so when they are stacked, continuous air flow paths are formed between the layers. During molding, a vacuum is applied to remove air from the spaces between the layers and thereby help to consolidate them. This method is limited to forming low areal weight prepregs, which are not stacked to form a higher area weight assembly until the molding step is performed. Orienting the layers correctly and precisely is extremely difficult when performed as part of the molding process.

WO 2005/033393 describes a process in which layers of unidirectional prepreg are stacked and molded. As with GB 2,450,196, this method is limited to making low areal weight prepregs. Stacking is not performed until the molding step. Because of this, the job of stacking and orienting the individual layers must be done by hand as part of the process of manufacturing the final part, which is labor-intensive and expensive. This process has the same problem with orienting the layers correctly as with GB 2,450,196.

What is desired is a process that can provide high area density prepregs that are highly infused with resin. The process and resulting prepreg should be easily adaptable for automated production and handling of the prepreg. The process preferably is versatile and can be used to make specialized parts optimized for specific applications.

This invention is a method for making a curable multiaxial prepreg, comprising
A) impregnating multiple aligned fiber tows with a heat-softened, thermosetting resin composition without curing the thermosetting resin composition, wherein the thermosetting resin composition is solid and non-tacky at 25°C, has a curing temperature of at least 80°C and a Mettler softening temperature below its curing temperature, and then cooling the composition to below its Mettler softening temperature to form a unidirectional prepreg which is non-tacky at 25°C and in which the resin infusion is at least 70%, the prepreg containing up to 500 g/m² of unidirectional reinforcing fibers;
B) stacking two or more layers of the unidirectional prepreg to form a multilayer stack in which the orientation of the unidirectional fibers in at least one prepreg layer is different from the orientation of the unidirectional fibers in at least one other prepreg layer to form a multilayer stack containing at least 500 g/m² of reinforcing fibers;
C) heat-softening at least a portion of the thermosetting resin composition of at least some of the stacked prepreg layers without curing the thermosetting resin composition, and then cooling and thereby re-hardening the thermosetting resin composition while maintaining the adjacent layers of the stack in contact with each other to form adhesive bonds between the layers of the stack and produce the curable multiaxial prepreg.

This process produces a multiaxial prepreg having a high infusion of resin. The high resin infusion allows high performance parts to be molded from the prepreg. The process avoids the necessity (and associated expense) of producing a woven or stitched mat of reinforcing fibers and allows for precise alignment of the reinforcing fibers and optimization of properties for specific applications. The process is easily automated. Because the process is divorced from the molding operation by which the prepreg is molded to form the composite, the molding operation itself is simplified. A further advantage is that the individual prepreg layers and the multiaxial prepregs are dry and non-tacky, which facilities automated handling during production, transport, packaging, storage and molding.

Still another benefit of the process is that it is easily integrated into the fiber manufacturing process, often with the elimination of one or more conventional steps, thereby further reducing cost. For example, the impregnation step can be performed on newly manufactured tows, in place of the ordinary application of sizing to the fibers.

In the first step of the process, a unidirectional prepreg is formed. By "unidirectional" it is meant that the reinforcing tows in the prepreg are aligned parallel to each other. The unidirectional prepreg is prepared by impregnating multiple aligned unidirectional tows with a heat-softened, thermosetting resin composition. The tows preferably form a monolayer, but may form two or more layers that are unidirectionally aligned.

The "tows" (sometimes referred to as "rovings" or simply "fibers") are multifilament fibers. The number of filaments per fiber may be, for example, 100 to 30,000. The tows should be thermally and chemically stable under the conditions of prepreg formation, the adhesion of the unidirectional prepreg layers and the ultimate part formation process (*i*.*e*., curing of the thermosetting resin). The tows may be, for example, glass or other ceramic, a natural fiber such as jute, cotton or wool or an organic polymer.

The tows are most preferably carbon fibers. Examples of such carbon fibers are Aksaca 3K A-38, 6K A-38, 12K A-42, 24K A-42, 12K A-49 and 24K A-49 carbon fibers from DowAksa Ileri Kompozit Malzemeler Sanayi Ltd, Sti, Itanbul, Turkey. These product designations indicate the approximate number of filaments/roving in thousands (3K being 3000 filaments, for example) and the approximate tensile strength of the fiber in hundreds of MPa (A-38 indicating a tensile strength of 3800 MPa). Other suitable carbon fibers include 12K and 24K rovings available from Dost Kimya End Hamm Sen Ve Tic Ltd. Sti, Istanbul, Turkey. The carbon content of the carbon fibers may be 80% or more by weight.

The diameter of the individual tows may be, for example 0.5 to 30 microns, preferably 2 to 15 microns. In terms of fiber weight, the individual tows may have a weight of, for example, 200 to 3000 g/1000 meters, 600 to 2000 g/1000 meters, or 750 to 1750 g/1000 meters.

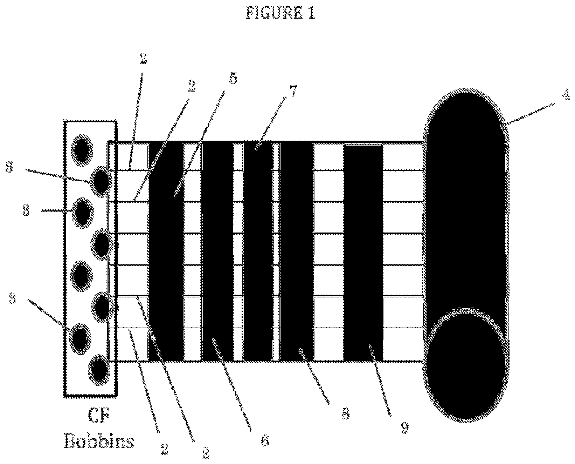

As shown in Figure 1, aligned tows 2 can be supplied by multiple bobbins 3. Tows 2 preferably are pulled or otherwise transported through the impregnation process so the impregnation process can be performed continuously. In Figure 1, this is performed by winding prepreg 4; the winder or other apparatus pulls tows 2 and the prepreg 4 though one or more stations in which tows 2 are impregnated. In Figure 1, the distances between individual tows 2 are exaggerated for purposes of illustration, and flattening or spreading of the tows is not shown, again for purposes of illustration.

Tows 2 may be flattened or spread prior to impregnation to facilitate fiber impregnation between the filaments that make up the tows. In the embodiment shown in Figure 1, tows 2 are optionally heated at heating station 5 prior to introduction of the resin. Resin is supplied to the tows at impregnation station 6. The resin can be supplied in melted or heat-softened form, or in the form of a solid which is melted or heat-softened after it is brought into contact with tows 2. If supplied as a solid, sufficient heat to melt or heat-soften the resin is applied. This heat may be supplied, for example, from the latent heat of tows 2 (if heated prior to applying the resin), or by heating the impregnated tows at one or more heat stations such as heating station 8. After the resin is applied to tows 2 and melted or heat-softened, the impregnated tows may be compacted, such as at compaction stations 7 and 9, to mechanically force the melted or heat-softened resin between and into tows 2 in order to increase resin infusion and reduce or eliminate voids.

Multiple impregnation stations 6 and/or heating stations 5 and/or 8 may be used as necessary or desirable. If compaction is performed, a single compaction station or more than two can be used, again as useful or desirable. The functions of heating and compaction can be performed in a single station in some embodiments such as, for example, by passing the tows and resin through heated nip rollers, heated plates or heated belts. The sequential arrangement of impregnation, heating and compaction (if any) can be varied, although the final compaction step will be performed after all resin has been applied to the tows and heat softened. Prepreg 4 preferably is cooled to harden the resin before winding or other storage, and before stacking.

The thermosetting resin composition with which the tows are impregnated is solid and non-tacky at 25°C. It has a curing temperature of at least 80°C, preferably at least 90°C. By "curing temperature", it is meant the lowest temperature at which the thermosetting resin composition cures rapidly to form a thermoset polymer. Curing is indicated by a significant increase in viscosity and/or in the glass transition temperature of the uncured resin as it gains in molecular weight. Thus, the curing temperature is the lowest temperature at which a significant and rapid increase in viscosity and/or glass transition temperature is seen. Rapid curing at any temperature is indicated, for example, by an increase in glass transition temperature of at least 20°C, preferably at least 40°C, in 15 minutes or less at such temperature. Therefore, in some embodiments, the "curing temperature" is the lowest temperature at which such an increase in glass transition temperature is achieved. Conversely, the thermosetting resin composition will exhibit a slower increase in glass transition temperature at temperatures below the cure temperature. In a preferred embodiment, the thermosetting resin composition requires at least 2 hours to exhibit a 10°C increase in glass transition temperature when heated to 80°C and held at that temperature, which is indicative of a curing temperature in excess of 80°C.

The curing temperature is primarily controlled through the selection of its components. Preferably, the curing temperature contains at least one latent component that becomes activated at some elevated temperature and when activated produces the rapid cure. The latent component in some embodiments is a hardener (curing agent) for the thermosetting resin, or a catalyst (or both).

The thermosetting resin composition has a Mettler softening temperature below its curing temperature. Its Mettler softening temperature preferably is at least 40°C, but at least 10°C below its curing temperature. Mettler softening temperature can be determined according to ASTM D6090-12.

The heating performed during prepreg manufacturing is insufficient to cure the thermosetting resin. Because the melting or softening temperature of the thermosetting resin composition is lower than its curing temperature, this can be accomplished by heating the resin to a temperature at or above the melting or softening temperature but below the curing temperature. It is also possible to achieve this by heating the thermosetting resin temperature to or above the curing temperature during the impregnation step, if the time at such temperature is short enough that significant curing does not take place. During the impregnation step, the glass transition temperature of the uncured thermosetting resin should not increase by more than 10°C and preferably increases no more than 5°C, if at all.

After the impregnation step is complete, the resulting prepreg preferably is cooled to below the Mettler softening temperature of the thermosetting resin composition to harden (but not cure) it and produce a resin phase that is non-tacky at 25°C.

The resulting unidirectional prepreg contains aligned, straight reinforcing fibers that extend across a major dimension of the prepreg. The individual fibers are impregnated with and held together by the thermosetting resin composition. The tows in preferred embodiments are arranged in a monolayer, although filaments within an individual tow may exhibit some crossing. Preferably, there is no crossing of the tows within the unidirectional prepreg. The thickness of the unidirectional prepreg may be, for example 0.05 to 5 mm, preferably 0.1 to 0.5 mm and even more preferably 0.15 to 0.4 mm. The areal weight of the fibers may be, for example, 20 to 500 g/m², preferably 40 to 500 g/m² and more preferably 50 to 300 g/m².

The resin infusion is at least 70%, preferably at least 75% and more preferably at least 85%, where 100% infusion indicates that all spaces between and within the fibers have been filled with the thermosetting resin composition. In specific embodiments, the % resin infusion is 85 to 95%. The % resin infusion can be determined using gravimetric methods, by determining the actual weight of resin in the prepreg and calculating the weight of the resin in a prepreg of like volume, assuming 100% infusion (*i.e.,* the complete absence of voids). The ratio of actual weight to the calculated weight is the % resin infusion.

An alternative method of determining % resin infusion is by measuring the void volume. The % resin infusion is then calculated from the void volume, the weight of resin in the prepreg and the density of the resin. The void volume can be measured by curing the prepreg under no applied pressure, then infusing the cured prepreg with a low viscosity fluid and measuring the volume of low viscosity fluid infused into the cured prepreg. The low viscosity fluid can be a low molecular weight thermosetting resin, which may be liquid and/or dissolved in a suitable solvent. To facilitate the measurement, the low viscosity fluid may contain a fluorescent or other type of die or marker that makes the low viscosity fluid easily distinguishable.

A multilayer stack is formed by stacking two or more layers of the unidirectional prepreg. The individual layers can be formed by cutting a unidirectional prepreg into plies of the desired shape and size. Alternatively, although less desirably, two or more of the individual layers can be formed by folding a length of a single unidirectional prepreg.

The number of layers is at least 2, and may be, for example, at least 3, at least 4, at least 6 or at least 8, as necessary or desirable for the particular part being manufactured. There is no limit on the maximum amount of layers, provided they can be adhered together as described below, although for practical reasons the number of layers may be limited to, for example, 50, 25, 20, 15, 12 or 10. Different sections of the multilayer stack may have different numbers of layers of the unidirectional prepreg as in the case, for example, in which the part being manufactured is to have areas having different thicknesses. At least a portion of the multilayer stack contains at least 500 g/m², preferably at least 750 g/m² and even more preferably at least 850 g/m² of the reinforcing fibers. The multilayer stack in some embodiments contains up to 2000 g/m² or up to 1250 g/m² of the reinforcing fibers in at least a portion of the stack.

The orientation of the unidirectional fibers in at least one layer of the unidirectional prepreg in the stack is different from the orientation of the unidirectional fibers in at least one other layer of the stack. Preferably the orientation of the unidirectional fibers in one layer of the multilayer stack is at an angle of 30 to 90 degrees from the orientation of the unidirectional fibers in at least one other layer of the stack, the angle being measured as the smallest angle defined by the intersection of the fibers. The orientation of the fibers in the various layers of the stack affect the directional properties of the molded composite; therefore, the selection of the directions of orientation of the fibers of the various layers and the number of layers in each orientation are made to obtain the desired directional properties. The properties of the final composite therefore can be made to range from highly anisotropic to highly isotropic.

A preferred multilayer stack will have a outermost (either top or bottom) layer having a first orientation, at least one other layer in which the fibers are oriented at an angle of 30 to 60 degrees clockwise (as viewed from top or bottom) from those of the outmost layer, and at least one layer in which the fibers are oriented at an angle of 30 to 60 degrees counter-clockwise (as viewed from the same perspective) to the outermost layer. Such a preferred multilayer stack may contain one or more layers in which the fibers are oriented at 90 degrees to the outermost layer, and may contain one or more layers in which the fibers are oriented in the same direction as the outermost layer.

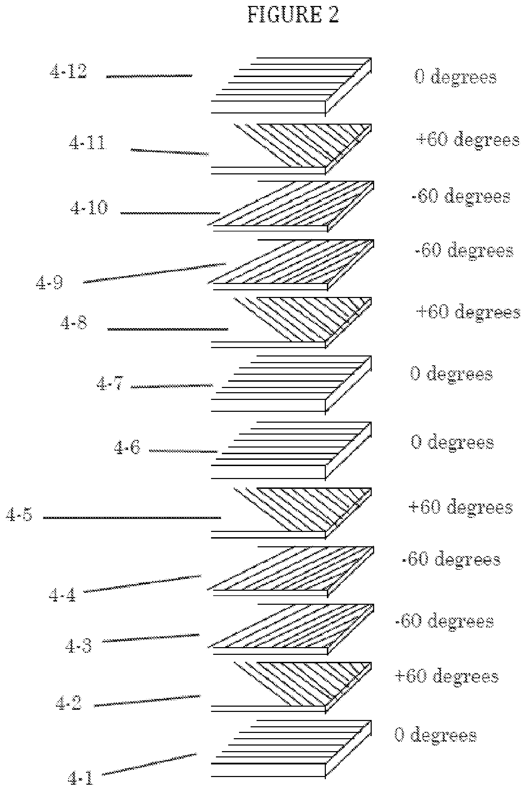

Figure 2 depicts an illustrative stacking pattern. In Figure 2, twelve unidirectional prepregs 4-1 through 4-12 are stacked to form the multilayer stack. The orientations of the unidirectional fibers in each prepreg layer are indicated in Figure 2. The orientation of the fibers in prepreg layer 4-1 are arbitrarily designated as "0°". The orientations of the fibers in other layers are indicated relative to those of the layer 4-1, with a positive angle indicating a counter-clockwise direction and a negative angle indicating a clockwise direction, in each case as viewed from above the multilayer stack. Thus, in the embodiment shown in Figure 2, the orientation of the fibers of prepreg layers 4-2, 4-5, 4-8 and 4-11 are each 60° clockwise; that of prepreg layers 4-3, 4-4, 4-9 and 4-10 are each 60° counter-clockwise; that of prepreg layers 4-1, 4-6 and 4-7 are 0°, i.e., the fibers of those layers are aligned with those of prepreg layer 4-11. This arrangement provides quasi-isotropic properties to the molded composite made from the stack.

Because the unidirectional prepreg is non-tacky, the stacking process is easily automated and/or performed robotically.

In some embodiments, the unidirectional prepreg is pre-cut into sections which when stacked form a multilayer stack which may have specialized dimensions suitable for making a particular part. In such a case, the multilayer stack (after adhering the layers as described below) can be molded into a part without further cutting or shaping (apart from minor trimming as may be necessary)

In other embodiments, the multilayer stack may be formed as rollstock or boardstock that does not have specialized dimensions. In such an embodiment, a bottommost layer of the unidirectional prepreg can be supplied uncut, as rollstock for example, and fed into a stacking operation. The alignment of the fibers of this bottommost layer typically will be oriented in the same direction as the length (longest dimension) of that layer. To form layers in which the fibers are oriented at an angle to this direction, another unidirectional prepreg is cut into sections, which are stacked on top of the bottommost layer. This can be done continuously or semi-continuously by passing the bottommost layer past one or more automated and/or robotic stations where the pre-cut sections are laid into place with the desired fiber orientation. Additional layers in which the fiber orientation is the same as that of the bottommost layer can be supplied uncut, as rollstock, for example, in the same manner as the bottommost layer. This process forms an elongated multilayer stack that, after adhering the layers together, produces a boardstock or rollstock that subsequently can be cut into specific shapes and sizes to make specific parts.

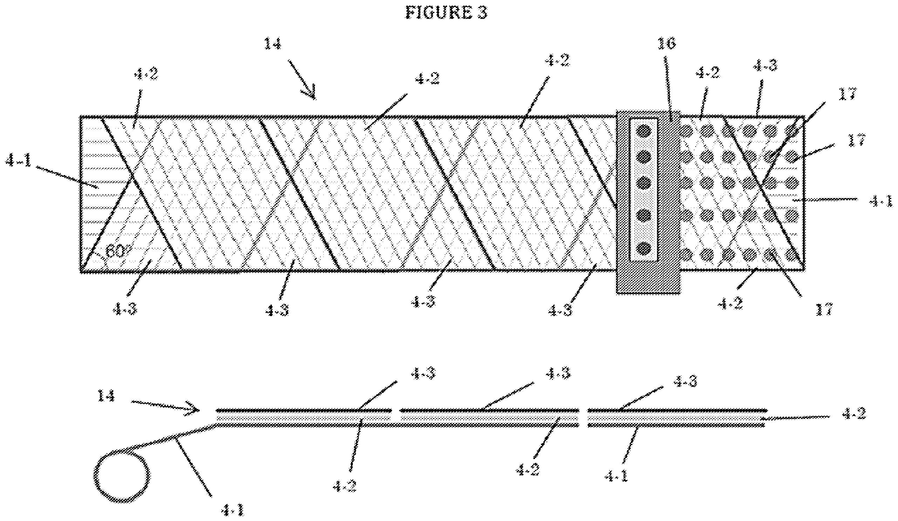

Figure 3 illustrates such a multilayer rollstock 10. In Figure 3, bottommost layer 4-1 is uncut and continuous throughout the length of multilayer stack 14. In the embodiment shown, bottommost layer 4-1 is provided as rollstock. Its width may be, for example, 0.3 meters to 10 meters or more. A preferred width is 0.3 meters to 4 meters. Another unidirectional prepreg is cut into sections 4-2 to form a second layer of multilayer stack 14. Sections 4-2 are stacked onto bottommost layer 4-1 to form the second layer. The sections 4-2 are laid adjacent to each other to form a continuous second layer on top of bottommost layer 4-1. The fibers of sections 4-2 are aligned at an angle to those of bottommost layer 4-1; as shown this angle is 60 degrees, although other angles can be used as described before. As shown in Figure 3, a third layer is formed by cutting another unidirectional prepreg into section 4-3, stacking these onto the second layer formed by sections 4-2. Sections 4-3 are laid adjacent to each other to form a continuous third layer on top of the second layer made up of sections 4-2. As shown, the fibers of the third layer are at an angle of 60 degrees to those of bottommost layer 4-1 and an angle of 120 degrees to those of the second layer made up of sections 4-2, although different angles can be used and the fibers of the third layer can be collateral with those of either of the other layers. Additional layers can be added to the specific embodiment shown in Figure 3. Layers in which the fibers are oriented in the same direction as the bottommost layer can be supplied in the same manner as bottommost layer 4-1, as a continuous section of uncut unidirectional prepreg, supplied, for example, as rollstock.

The layers of the multilayer stack are adhered together to form a curable multiaxial prepreg. This adhesion is achieved by heat-softening the thermosetting resin composition of the various layers and then re-cooling the composition with the layers in contact with each other to re-harden the composition, thereby forming adhesive bonds between the layers. The adhesive bonds can cover the entire surface areas of the respective adjacent layers, or only a portion thereof. In some embodiments, the thermosetting resin composition is locally heat-softened only in discrete regions. Upon cooling and re-hardening, discrete and localized points of adhesion form between the unidirectional prepreg layers. These points may constitute, for example, 1 to 90%, 2 to 50% or 5 to 35% of the major surface areas of the respective adjacent layers.

In some embodiments, the adhering step is performed in a mold. In such a method, the layers of the multilayer stack can be adhered together to form the curable multiaxial prepreg while at the same time shaping the curable multiaxial prepreg. This method is useful, for example, to form shaped preforms that have approximately the shape and dimensions of the final molded part. This approach simplifies the subsequent molding process.

In other embodiments, the adhering step is performed without further shaping the curable multiaxial prepreg that is formed. For example, the stack can be supplied as rollstock or boardstock as described before, or as smaller pieces that may have a specialized shape for making a specific part. Such a stack is subjected to heat and pressure sufficient to push the individual layers into contact with each other. Energy is supplied to heat the thermosetting resin to melt or soften it, while enough pressure is applied to bring the layers in to contact so the melted or softened resin of the respective layers contacts adjacent layer and, when re-cooled to below the melting or softening temperature while maintaining the layers in contact with each other, forming adhesive bonds between the layers.

Various sorts of apparatus can be used to melt or heat-soften the thermosetting resin composition. In some embodiments, heat energy is applied to the multilayer stack. This can be done, for example, by contacting the multilayer stack with a heated gas (as, for example, in an oven), one or more heated plates, one or more heated rollers, by exposing the stack to infrared or other electromagnetic radiation or by some other convenient method. Alternatively (or in addition), mechanical energy such as ultrasound energy can be applied to the stack to produce the needed heating.

The pressure needed to maintain the layers of the stack in contact with each other can be supplied mechanically by the application of a weight, by passing the stack through a constricted region, for example by passing the stack between nip rollers, between the bands of a double band laminator, or through other lamination equipment. The pressure can be applied simultaneously with heating the thermosetting resin composition by heating the apparatus that applies the pressure. In some cases, the weight of the unidirectional prepreg layers by themselves can be sufficient.

The energy can be applied generally (*i.e.,* in a non-localized manner) to the stack to melt or heat-soften essentially all of the thermosetting resin composition. This can produce a curable multiaxial prepreg in which the various layers are adhered together across most or all of their surface area. Alternatively, the energy can be applied only to discrete portions of the stack, so that discrete, localized bonded areas form. Localized bonding can be produced, for example, through the use of one or more spot-heated rollers or equivalent apparatus. The spot-heated roller is heated only at certain portions of its surface so that when contacted with the multilayer stack it applied heat to certain areas of the stack but not in others. In Figure 3, such a spot-heated roller is shown at reference numeral 16; it applies heat to (as shown) discrete spots 17 at which the layers become adhered in a spot pattern. Instead of a spot pattern, the discrete bonded areas can form any arbitrary arrangement, including, for example, a set of parallel lines (each of which can be either continuous or discontinuous), a set of crossing lines (each of which can be either continuous or discontinuous), rows of dots, and the like. A similar pattern of adhesions can be produced by ultrasonic spot welding.

The heating step is performed without significantly curing the thermosetting resin composition. Preferably, the glass transition temperature of the thermosetting resin composition increases by no more than 10°C, more preferably by no more than 5°C, during this step. In general conditions such as are described above with respect to the impregnation step, *i.e.,* an applied temperature preferably between the melting or softening temperature and the curing temperature or, if the curing temperature is met or exceeded, control of the time at such temperature.

Once the thermosetting resin is melted or heat-softened and the melted or heat-softened resin of each layer is in contact with an adjacent layer, the resin composition is cooled to form adhesive bonds between the layers. Cooling can be done by simply exposing the stack to ambient conditions, or by applying cooling. Cooling can be applied, for example, by contacting the stack with cooled gas (as in a refrigerator or freezer), by blowing a cool gas over the stack, by contacting the stack with a cooled surface such as a cooled plate, cooled rollers, and the like. Pressure is maintained until the thermosetting resin composition has rehardened.

It is highly preferred in this invention to omit any step of mechanically affixing the unidirectional layers in the stack to each other, other than through the formation of interlayer adhesive bonds as described above. Therefore, in preferred embodiments of the invention, the process excludes any step of mechanically affixing the individual prepreg layers or multiple layers of rovings together prior to, during or after the formation of adhesive bonds as described herein. In particular, the preferred process omits any step of stitching, sewing, weaving or interlacing the individual unidirectional prepreg layers or multiple layers of the rovings together, and the multilayer prepreg formed in the process preferably omits any such stitching, sewing, weaving or interlacing.

The resulting curable multilayer prepreg can be, if necessary, cut into pieces having a geometry (size and shape) suitable for molding to form any specific part. The curable multilayer prepreg (or a piece cut therefrom) can be prefolded or premolded, in each case without substantially curing the thermosetting resin composition, to form a shaped part that can be formed into a final part by curing the resin composition. Prefolding and/or premolding simplifies the subsequent molding/curing application.

The thermosetting resin composition includes at least one resin that polymerizes or cures to form a cured, thermoset polymer. Examples of thermosetting resins are epoxy resins, phenolic resins, cyanate ester resins, bis(maleimide) resins, unsaturated polyester and vinyl ester polymers. Epoxy dispersions are preferred on the basis of cost, availability and generally beneficial properties.

In some instances, the resin may be the only component of the thermosetting resin composition. In such a case, the thermosetting resin is capable of curing by itself when brought to some elevated temperature of at least 80°C. More typically, however, the resin cures through reaction with one or more hardeners and/or through the action of one or more catalysts and/or polymerization initiators, in which case the thermosetting resin composition will contain such material(s) in addition to the thermosetting resin.

The thermosetting resin composition melts (*i.e.,* has a crystalline melting temperature) or melt-softens (*i.e.,* does not undergo a melting of a crystalline phase but nonetheless attains a flowable state) at a temperature of at least 40°C but less than the curing temperature. The softening temperature preferably is 40 to 70°C. In some instances, the thermosetting resin composition may be a physical mixture of components, some of which are solids that melt or soften (if at all) at a temperature equal to or higher than the cure temperature. In such a case, the thermosetting resin composition is considered for purposes of this invention to melt or heat-soften at the temperature at which largest phase by volume melts or heat-softens. Typically, this phase is the thermosetting resin itself.

The thermosetting resin composition has a cure temperature of at least 80°C, preferably at least 100°C. In some embodiments, the cure temperature may be at least 120°C. It is generally preferable that the cure temperature is no greater than 200°C, especially no greater than 160°C.

The thermosetting resin composition may contain one or more catalysts and/or curing agents, as may be necessary or desirable to cure the thermosetting polymer when a part is produced. Such catalyst(s) and/or curing agent(s) may be dissolved in the resin or dispersed therein.

The thermosetting resin composition may contain other ingredients as may be useful or desirable, including, for example, rheological modifiers such as thixotropic agents or thickeners, colorants, preservatives, biocides, fillers, and the like. The thermosetting resin composition may contain a small amount (such as up to 5 weight-%, preferably up to 2 weight-%) of a thermoplastic polymer, which may facilitate bond formation between the layers of the multilayer prepreg. Any or all of these ingredients may be absent from the composition.

The selection of thermosetting resin, together with the choice of catalysts and/or curing agents (if present) is made in conjunction with conditions used in the curable multiaxial prepreg-forming process (in general, temperature and residence time) such that no significant curing of the thermosetting resin occurs.

In the preferred case when the thermosetting resin is an epoxy resin, the thermosetting resin composition preferably contains a heat-activated catalyst, a heat-activated epoxy curing agent, or both. The heat-activated catalyst or curing agent may be, for example, a solid material that melts and therefore becomes available for reaction at an elevated temperature. Alternatively, it may be an encapsulated material in which the encapsulant melts or degrades at an elevated temperature to release the active material. The curing agent or catalyst may have blocked reactive or catalytic sites that thermally deblock at an elevated temperature. This elevated temperature may be, for example, at least 80°C, at least 100°C or at least 120°C and preferably is no greater than 200°C, more preferably no greater than 160°C.

In a preferred prepreg, the thermosetting resin composition is a mixture of at least one epoxy resin, at least one epoxy hardener and at least one catalyst for the reaction of the epoxy resin and the hardener. The epoxy hardener and the catalyst preferably are heat-activatable types that become activated at a temperature of at least 80°C. Preferably at least one of the hardener and the catalyst becomes activated at a temperature of at least 100°C or at least 120°C. As described before, the mechanism by which the hardener and/or catalyst become activated may be, for example, melting; the loss of an encapsulant through melting or otherwise; thermal de-blocking, or other mechanism.

A wide range of epoxy resins are suitable, including those described at column 2 line 66 to column 4 line 24 of U.S. Patent 4,734,332, incorporated herein by reference, it being preferred that one or more of the epoxy resins is a room temperature solid having a Mettler softening temperature of at least 50°C, preferably at least 80°C. The epoxy resin or resins should have an average of at least 2.0 epoxide groups per molecule. The epoxy resin or resins preferably has an average epoxy equivalent weight of 170 to 2000, more preferably from 170 to 1200 and still more preferably from 170 to 1000.

A preferred type of epoxy resin is a diglycidyl ether of a polyhydric phenol compound such as resorcinol, catechol, hydroquinone, biphenol, bisphenol A, bisphenol AP (1,1-bis(4-hydroxylphenyl)-1-phenyl ethane), bisphenol F, bisphenol K and tetramethylbiphenol. These can have average epoxy equivalent weights of from about 170 to 600 or more, preferably from 225 to 400. Examples of epoxy resins of this type include diglycidyl ethers of bisphenol A such as are sold by The Dow Chemical Company under the designations D.E.R.® 330, D.E.R.® 331, D.E.R.® 332, D.E.R.® 383, D.E.R. 661 and D.E.R.® 662 resins.

Other useful epoxy resins (any of which can be used by themselves or in admixture with one or more others) include, for example, diglycidyl ethers of aliphatic glycols and polyether glycols, such as the diglycidyl ethers of C₂₋₂₄ alkylene glycols and poly(ethylene oxide) or poly(propylene oxide) glycols (including those sold as D.E.R.® 732 and D.E.R.® 736 by Dow Chemical); polyglycidyl ethers of phenol-formaldehyde novolac resins (epoxy novolac resins), including those sold as D.E.N.® 354, D.E.N.® 431, D.E.N.® 438 and D.E.N.® 439 by Dow Chemical; alkyl substituted phenol-formaldehyde resins; phenolhydroxybenzaldehyde resins; cresol-hydroxybenzaldehyde resins; dicyclopentadiene-phenol resins; cycloaliphatic epoxides including (3,4-epoxycyclohexyl-methyl)-3,4-epoxycyclohexane carboxylate, bis-(3,4-epoxycyclohexyl) adipate, vinylcyclohexene monoxide as well as others as described in U.S. Patent No. 3,686,359; oxazolidone-containing compounds as described in U. S. Patent No. 5,112,932; dicyclopentadiene-substituted phenol resins; and advanced epoxy-isocyanate copolymers such as those sold commercially as D.E.R. 592 and D.E.R. 6508 (Dow Chemical).

In all of the foregoing cases, any of the epoxy resin(s) contained in the thermosetting resin composition can be liquid at 22°C provided that the thermosetting resin composition as a whole is a solid at that temperature and preferably has a Mettler softening temperature as described before.

The epoxy hardener preferably is selected together with any catalyst(s) such that the thermosetting resin composition has a curing temperature as described before. Suitable hardeners include materials such as boron trichloride/amine and boron trifluoride/amine complexes, dicyandiamide, melamine, diallylmelamine, guanamines such as acetoguanamine and benzoguanamine, aminotriazoles such as 3-amino-1,2,4-triazole, hydrazides such as adipic dihydrazide, stearic dihydrazide, isophthalic dihydrazide, semicarbazide, cyanoacetamide, and aromatic polyamines such as diaminodiphenylsulphones.

The hardener is present in an amount sufficient to cure the epoxy resin. Typically, enough of the curing agent is provided to consume at least 80% of the epoxide groups present in the composition. A large excess over that amount needed to consume all of the epoxide groups is generally not needed.

The catalyst is preferably encapsulated or otherwise a latent type that becomes active only upon exposure to elevated temperatures. The latent types include catalysts that are integrated into a polymeric matrix such as a poly(p-vinylphenol) matrix (as described in European patent EP 0 197 892) or into a novolac resin (including, for example, those described in US 4,701,378 and WO 2012/000171).

Among preferred epoxy catalysts are ureas such as p-chlorophenyl-N,N-dimethylurea (Monuron), 3-phenyl-1,1-dimethylurea (Phenuron), 3,4-dichlorophenyl-N,N-dimethylurea (Diuron), N-(3-chloro-4-methylphenyl)-N',N'-dimethylurea (Chlortoluron), toluene-2,4-dimethyl urea, toluene-2,6-dimethyl urea, tert-acryl- or alkylene amines like benzyldimethylamine, 2,4,6-tris(dimethylaminomethyl)phenol, piperidine or derivatives thereof, various aliphatic urea compounds such as are described in EP 1 916 272; C₁-C₁₂ alkylene imidazole or N-arylimidazoles, such as 2-ethyl-2-methylimidazol, or N-butylimidazol and 6-caprolactam. A preferred catalyst is 2,4,6-tris(dimethylaminomethyl)phenol integrated into a poly(p-vinylphenol) matrix (as described in European patent EP 0 197 892), or 2,4,6-tris(dimethylaminomethyl)phenol integrated into a novolac resin (including, for example, those described in US 4,701,378 and WO 2012/000171).

The curable multiaxial prepreg of the invention can be used to make reinforced composites. The composite manufacturing process involves shaping the prepreg using any convenient method or combination of methods, and then curing the thermosetting resin. The shaping and/or curing may be performed in a mold, a press or other convenient apparatus. The prepreg may be formed onto a support and/or to other components as may be useful for the particular application for which the part is intended. The curing is generally performed at an elevated temperature sufficient to cure the thermosetting resin in an economically short period of time, such as up to 30 minutes, up to 15 minutes, up to 10 minutes or up to 5 minutes. The curing temperature may be as low as the cure temperature of the thermosetting resin composition or up to, for example, 250°C or more. For epoxy resin systems, a preferred curing temperature is 80 to 200°C, especially 120 to 160°C.

Multiple layers of the curable multilayer prepreg may be "laid-up" onto a form or substrate to produce thicker parts. The formed part may be overmolded with a show surface or otherwise coated if desired.

Examples of specific parts that can be made using the prepregs of the invention include frame members, roof pillars, body panels and the like for automobiles, trucks, trains and other land transportation vehicles; aircraft fuselage, wing, aileron, tail and/or rudder panels and frame members; sporting and recreational equipment such as golf club shafts, tennis racket frames, jet-ski bodies, boat hulls, hockey sticks, lacrosse sticks, and the like; personal protective gear such as helmets and body armor; and in various construction applications.

The following example is provided to illustrate the invention, but is not intended to limit the scope thereof. All parts and percentages are by weight unless otherwise indicated.

### Example 1 and Comparative Sample A

A unidirectional prepreg is made by impregnating tows of Aksaca 24K A-42 carbon fibers (DowAksa Ileri Kompozit Malzemeler Sanayi Ltd, Sti) with a thermosetting resin composition having a cure temperature of greater than 90°C and a Mettler softening temperature of 40 to 75°C. Bobbins containing the fibers are mounted across a width of 508 mm, and the tows are pulled sequentially through a spreading station, a heating station, a resin application station, a compacting station, a second heating station, and a second compacting station. The tows are all parallel to each other, form a single layer, and are spaced such that the fiber areal weight is about 225 g/m².

In the first heating station, the fibers are heated to about 80 to 120°C. The thermosetting resin composition is applied to the heated fibers as a particulate solid, which is mechanically pressed into and between the fibers in the first compacting station. In the second heating station, the thermosetting resin composition is heat-softened by heating it to 80 to 120°C, and in the second compacting station the heat-softened resin composition is again mechanically pressed into the fibers. The thermosetting resin composition is then cooled to below its Mettler softening temperature to form a unidirectional prepreg. The areal weight of the unidirectional prepreg is about 385 g/m². The unidirectional prepreg contains about 41% by weight of the thermosetting resin composition and 59% by weight of the fibers. The % resin infusion is approximately 90%. Essentially no curing of the resin occurs during the heating steps since the heat is only applied to the resin for a short period of time.

A portion of the unidirectional prepreg is cut into 508 mm X 762 mm sections. Two stacks of four prepreg layers are formed. The fiber orientation in the layers (from bottom to top) is 0°, -45°, 90° and +45°. The stacks are separately heated to 60 to 80°C under pressure to soften the thermosetting resin composition and then cooled to produce two multilayer prepregs in which the individual unidirectional prepreg layers are bonded together by the thermosetting resin composition. Again, essentially no curing of the thermosetting resin occurs. The stacks are then cut to produce a square multilayer prepreg about 305 mm on a side.

One of the multilayer stacks is inverted and placed atop the other in a preheated, dome-shaped laboratory mold. The stacks are molded under pressure at 150°C for about three minutes to cure the resin and form a shaped composite, which is designated Example 1. Test coupons are cut from shaped composite and tested for tensile strength at break, elongation at break, tensile modulus and compressive strength according to ASTM D3030 and ASTM D3410. Results are as indicated in Table 1 below.

To produce Comparative Sample A, a four-layer fabric is formed from the same fibers. The four layers are laid atop each other with fiber orientations of 0°, -45°, 90° and +45°, respectively. Each layer has an areal weight of about 200 g/m². The layers are sewn together. The four-layer fabric is impregnated with the thermosetting resin composition in the same manner described with respect to Example 1, to form a prepreg having an areal weight of 1295 g/m², which corresponds to only 36.4% resin and 64% fibers. The % resin infusion is only 45%. This prepreg (Comp. Sample A) is cut into sections as described with respect to Example 1, and two of the sections are stacked and molded as described in Example 1. Physical properties are measured as before, with results as indicated in Table 1.

**Table 1**

| **Property** | **Ex. 1** | **Comp. A** |
|---|---|---|
| **Tensile Strength, MPa** | **445** | **438** |
| **Elongation, %** | **1.33** | **1.45** |
| **Tensile Modulus, GPa** | **42.6** | **<30** |
| **Compressive Str., MPa** | **300** | **<100** |

These results demonstrate the very substantial advantages of this invention. While tensile strength and elongation is similar between the two samples, the tensile modulus of Example 1 is almost 50% greater than the Comparative, and compressive strength is more than tripled.

## Claims

1. A method for making a curable multiaxial prepreg, comprising
A) impregnating multiple aligned fiber tows with a heat-softened, thermosetting resin composition without curing the thermosetting resin composition, wherein the thermosetting resin composition is solid and non-tacky at 25°C, has a curing temperature of at least 80°C and a Mettler softening temperature below its curing temperature, wherein the Mettler softening temperature is determined according to ASTM D6090-12, and then cooling the composition to below its Mettler softening temperature to form a unidirectional prepreg which is non-tacky at 25°C and in which the resin infusion is at least 70%, the prepreg containing up to 500 g/m² of unidirectional reinforcing fibers;
B) stacking two or more layers of the unidirectional prepreg to form a multilayer stack in which the orientation of the unidirectional fibers in at least one prepreg layer is different from the orientation of the unidirectional fibers in at least one other prepreg layer to form a multilayer stack containing at least 500 g/m² of reinforcing fibers;
C) heat-softening at least a portion of the thermosetting resin composition of at least some of the stacked prepreg layers without curing the thermosetting resin composition, and then cooling and thereby re-hardening the thermosetting resin composition while maintaining the adjacent layers of the stack in contact with each other to form adhesive bonds between the layers of the stack and produce the curable multiaxial prepreg.

2. The method of claim 1, further comprising D) curing the curable multiaxial prepreg to form a composite.

3. The method of claim 1 or 2, wherein in step A), the resin infusion is at least 75%.

4. The method of any preceding claim, wherein in step A), there is no crossing of the tows in the unidirectional prepreg.

5. The method of any preceding claim, wherein in step A), the multiple aligned tows form a monolayer.

6. The method of any preceding claim, wherein the unidirectional layers in the multilayer stack are not mechanically affixed to each other, other than through the formation of interlayer adhesive bonds in step C).

7. The method of any preceding claim, wherein the unidirectional prepreg formed in step A) has an areal weight of fibers of 40 to 300 g/m².

8. The method of any preceding claim, wherein 3 to 12 layers are stacked in step B) and the areal weight of the fibers in the multilayer stack produced in step B) is 750 to 2000 g/m².

9. The method of any preceding claim, wherein in step C), the thermosetting resin composition is locally heat-softened in discrete areas and upon cooling and rehardening discrete and localized points of adhesion form between the unidirectional prepreg layers.

10. The method of any preceding claim, wherein in step C) the thermosetting reins composition is heat-softened by applying ultrasound energy.

## Patentansprüche

1. Ein Verfahren zum Herstellen eines aushärtbaren multiaxialen Prepregs, das Folgendes beinhaltet:
A) Imprägnieren mehrerer ausgerichteter Faserstränge mit einer thermisch erweichten wärmehärtbaren Harzzusammensetzung ohne Aushärten der wärmehärtbaren Harzzusammensetzung, wobei die wärmehärtbare Harzzusammensetzung bei 25 °C fest und nicht klebrig ist, eine Aushärtetemperatur von mindestens 80 °C und eine Mettler-Erweichungstemperatur unter ihrer Aushärtetemperatur aufweist, wobei die Mettler-Erweichungstemperatur gemäß ASTM D6090-12 bestimmt wird, und dann Abkühlen der Zusammensetzung auf unter ihre Mettler-Erweichungstemperatur, um ein unidirektionales Prepreg zu bilden, das bei 25 °C nicht klebrig ist und bei dem die Harzinfusion mindestens 70 % beträgt, wobei das Prepreg bis zu 500 g/m² unidirektionale Verstärkungsfasern enthält;
B) Stapeln von zwei oder mehr Schichten des unidirektionalen Prepregs zum Bilden eines mehrschichtigen Stapels, bei dem sich die Orientierung der unidirektionalen Fasern in mindestens einer Prepregschicht von der Orientierung der unidirektionalen Fasern in mindestens einer anderen Prepregschicht unterscheidet, um einen mehrschichtigen Stapel zu bilden, der mindestens 500 g/m² Verstärkungsfasern enthält;
C) thermisches Erweichen mindestens eines Teils der wärmehärtbaren Harzzusammensetzung von mindestens einigen der gestapelten Prepregschichten ohne Aushärten der wärmehärtbaren Harzzusammensetzung und dann Abkühlen und dadurch Wiedererhärten der wärmehärtbaren Harzzusammensetzung, während die benachbarten Schichten des Stapels miteinander im Kontakt gehalten werden, um Klebverbindungen zwischen den Schichten des Stapels zu bilden und das aushärtbare multiaxiale Prepreg zu produzieren.

2. Verfahren gemäß Anspruch 1, das ferner D) das Aushärten des aushärtbaren multiaxialen Prepregs zum Bilden eines Verbundstoffs beinhaltet.

3. Verfahren gemäß Anspruch 1 oder 2, wobei die Harzinfusion in Schritt A) mindestens 75 % beträgt.

4. Verfahren gemäß einem der vorhergehenden Ansprüche, wobei in Schritt A) in dem unidirektionalen Prepreg kein Kreuzen der Stränge auftritt.

5. Verfahren gemäß einem der vorhergehenden Ansprüche, wobei die mehreren ausgerichteten Stränge in Schritt A) eine einlagige Schicht bilden.

6. Verfahren gemäß einem der vorhergehenden Ansprüche, wobei die unidirektionalen Schichten in dem mehrschichtigen Stapel nicht mechanisch aneinander fixiert werden, außer durch die Bildung von Klebverbindungen zwischen den Schichten in Schritt C).

7. Verfahren gemäß einem der vorhergehenden Ansprüche, wobei das in Schritt A) gebildete unidirektionale Prepreg ein Faserflächengewicht von 40 bis 300 g/m² aufweist.

8. Verfahren gemäß einem der vorhergehenden Ansprüche, wobei in Schritt B) 3 bis 12 Schichten gestapelt werden und das Faserflächengewicht in dem in Schritt B) produzierten mehrschichtigen Stapel 750 bis 2000 g/m² beträgt.

9. Verfahren gemäß einem der vorhergehenden Ansprüche, wobei die wärmehärtbare Harzzusammensetzung in Schritt C) in diskreten Bereichen lokal thermisch erweicht wird und bei Abkühlen und Wiedererhärten diskrete und lokal begrenzte Klebepunkte zwischen den unidirektionalen Prepregschichten gebildet werden.

10. Verfahren gemäß einem der vorhergehenden Ansprüche, wobei die wärmehärtbare Harzzusammensetzung in Schritt C) durch Anwenden von Ultraschallenergie thermisch erweicht wird.

## Revendications

1. Une méthode pour réaliser un pré-imprégné multiaxe durcissable, comprenant
A) l'imprégnation de multiples brins de fibre alignés avec une composition de résine thermodurcissable, ramollie par chaleur, sans faire durcir la composition de résine thermodurcissable, la composition de résine thermodurcissable étant solide et non collante à 25 °C, ayant une température de durcissement d'au moins 80 °C et une température de ramollissement Mettler au-dessous de sa température de durcissement, la température de ramollissement Mettler étant déterminée selon l'ASTM D6090-12, et ensuite le refroidissement de la composition jusqu'à une température inférieure à sa température de ramollissement Mettler afin de former un pré-imprégné unidirectionnel qui n'est pas collant à 25 °C et dans lequel l'infusion de résine est d'au moins 70 %, le pré-imprégné contenant jusqu'à 500 g/m² de fibres de renforcement unidirectionnelles ;
B) l'empilement de deux couches ou plus du pré-imprégné unidirectionnel afin de former un empilement multicouche dans lequel l'orientation des fibres unidirectionnelles dans au moins une couche de pré-imprégné est différente de l'orientation des fibres unidirectionnelles dans au moins une autre couche de pré-imprégné afin de former un empilement multicouche contenant au moins 500 g/m² de fibres de renforcement ;
C) le ramollissement par chaleur d'au moins une portion de la composition de résine thermodurcissable d'au moins une partie des couches de pré-imprégné empilées sans faire durcir la composition de résine thermodurcissable, et ensuite le refroidissement et de ce fait le redurcissement de la composition de résine thermodurcissable tout en maintenant les couches adjacentes de l'empilement en contact les unes avec les autres afin de former des liaisons adhésives entre les couches de l'empilement et de produire le pré-imprégné multiaxial durcissable.

2. La méthode de la revendication 1, comprenant en outre D) le durcissement du pré-imprégné multiaxial durcissable afin de former un composite.

3. La méthode de la revendication 1 ou de la revendication 2, dans laquelle, à l'étape A), l'infusion de résine est d'au moins 75 %.

4. La méthode de n'importe quelle revendication précédente, dans laquelle, à l'étape A), il n'y a pas de croisement des brins dans le pré-imprégné unidirectionnel.

5. La méthode de n'importe quelle revendication précédente, dans laquelle, à l'étape A), les multiples brins alignés forment une monocouche.

6. La méthode de n'importe quelle revendication précédente, dans laquelle les couches unidirectionnelles dans l'empilement multicouche ne sont pas fixées mécaniquement les unes aux autres, autrement que par la formation de liaisons adhésives intercouches à l'étape C).

7. La méthode de n'importe quelle revendication précédente, dans laquelle le pré-imprégné unidirectionnel formé à l'étape A) a une masse surfacique de fibres de 40 à 300 g/m².

8. La méthode de n'importe quelle revendication précédente, dans laquelle 3 à 12 couches sont empilées à l'étape B) et la masse surfacique des fibres dans l'empilement multicouche produit dans l'étape B) est de 750 à 2 000 g/m².

9. La méthode de n'importe quelle revendication précédente, dans laquelle, à l'étape C), la composition de résine thermodurcissable est localement ramollie par chaleur dans des zones distinctes et lors du refroidissement et du redurcissement, des points distincts et localisés d'adhésion se forment entre les couches de pré-imprégné unidirectionnel.

10. La méthode de n'importe quelle revendication précédente, dans laquelle, à l'étape C), la composition de résine thermodurcissable est ramollie par chaleur en appliquant une énergie ultrasonore.
